(19) Europäisches Patentamt
European Patent Office
Office européen des brevets

(11) **EP 2 370 355 B1**

(12) **FASCICULE DE BREVET EUROPEEN**

(45) Date de publication et mention
de la délivrance du brevet:
**08.03.2017  Bulletin 2017/10**

(21) Numéro de dépôt: **09801741.1**

(22) Date de dépôt: **04.12.2009**

(51) Int Cl.:
*B82Y 30/00* (2011.01)     *B82Y 40/00* (2011.01)
*C09C 1/44* (2006.01)     *C01B 32/05* (2017.01)

(86) Numéro de dépôt international:
**PCT/FR2009/052409**

(87) Numéro de publication internationale:
**WO 2010/066990 (17.06.2010 Gazette 2010/24)**

(54) **PROCEDE DE SYNTHESE DE NANOTUBES DE CARBONE SUR MATERIAUX MICROMETRIQUES LONGS ET PARTICULAIRES**

VERFAHREN ZUR SYNTHESE VON KOHLENSTOFFNANORÖHREN AUF LANGEN TEILCHENFÖRMIGEN MIKROMETRISCHEN MATERIALIEN

METHOD FOR THE SYNTHESIS OF CARBON NANOTUBES ON LONG PARTICULATE MICROMETRIC MATERIALS

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité:  **08.12.2008  FR 0806869**

(43) Date de publication de la demande:
**05.10.2011  Bulletin 2011/40**

(73) Titulaire: **Centre National de la Recherche Scientifique (C.N.R.S.)**
**75794 Paris Cedex 16 (FR)**

(72) Inventeur: **BAI, Jinbo**
**F-92160 Antony (FR)**

(74) Mandataire: **Novagraaf Technologies**
**Bâtiment O2**
**2, rue Sarah Bernhardt**
**CS90017**
**92665 Asnières-sur-Seine Cedex (FR)**

(56) Documents cités:
WO-A-2007/026213     WO-A-2007/072584
WO-A-2008/132459     FR-A- 2 865 739
JP-A- 2007 191 840

**Description**

**Domaine technique**

La présente invention se rapporte à un procédé de synthèse de nanotubes de carbone à la surface d'un matériau.

Plus précisément, l'invention a pour objet un procédé de synthèse de nanotubes de carbone (NTC en abréviation) à la surface d'un matériau utilisant une source de carbone constituée d'acétylène et de xylène, et un catalyseur comprenant du ferrocène. Le procédé de l'invention, présente, entre autres, l'avantage de permettre de faire la synthèse des nanotubes « en continu » lorsque cela est souhaité. Par ailleurs, le procédé de l'invention est réalisé à des températures moins élevées que les procédés connus et sur des matériaux sur lesquels la croissance de nanotubes de carbone est en général difficilement reproductible et/ou difficilement homogène en diamètre des NTC et en densité (nombre de NTC par unité de surface). Ces avantages, parmi d'autres, rendent le procédé de l'invention particulièrement intéressant notamment sur le plan industriel.

La présente invention se rapporte également aux matériaux susceptibles d'être obtenus par ce procédé ainsi que leurs utilisations dans tous les domaines d'application de nanotubes de carbone connus notamment comme renfort par exemple pour la préparation des matériaux composites structuraux et fonctionnels.

Dans la description ci-dessous, les références entre crochets [ ] renvoient à la liste des références présentée à la fin du texte.

**Etat de la technique**

Les nanotubes de carbone (NTC) suscitent un grand intérêt dans le monde de la recherche autant fondamentale qu'appliquée car leurs propriétés sont exceptionnelles à bien des égards. D'un point de vue mécanique, les NTC présentent à la fois une excellente rigidité comparable à celle de l'acier, tout en étant extrêmement légers (6 fois plus légers que l'acier). Les NTC présentent également une bonne conductivité thermique et électrique. Selon leur structure les NTC peuvent être conducteurs ou semi-conducteurs.

La demande de brevet d'invention FR 2 865 739 décrit un procédé de synthèse de nanotubes de carbone à la surface d'un matériau par décomposition thermique à une température allant de 600 à 1100°C d'un mélange comprenant composé source de carbone tel que l'acétylène ou le xylène et un catalyseur tel que le ferrocène, sous un courant de gaz inerte et d'hydrogène.

Les NTC ont déjà été proposés comme renforts dans les matériaux composites.

Dans le cadre de l'invention, par « matériau composite » on entend un matériau constitué d'au moins deux constituants. L'un est « la matrice » qui assure la cohésion du composite. L'autre est « le renfort » ou « le renforcement » qui assure au composite des qualités physiques et mécaniques intéressantes.

Malgré les propriétés très intéressantes des NTC, à ce jour, leur utilisation pour renforcer les structures des matériaux composites s'est avérée peu satisfaisante. En effet, peu ou pas d'amélioration des propriétés mécaniques du matériau composite comme par exemple la résistance à la traction, à la flexion et à la compression, rigidité et durée de vie, allégement du poids spécifique, résistance à la corrosion n'a été obtenue. Par ailleurs, l'amélioration des propriétés de conduction électrique et/ou thermique a été insuffisante. Ceci peut s'expliquer par exemple par la détérioration des NTC ou de leurs propriétés lors de la dispersion des NTC, par la mauvaise dispersion ou alignement dans la matrice du matériau composite, par la résistance de contact élevée entre les NTC et/ou entre les NTC et leur environnement (matrice, substrats, etc.), par l'ajout de surfactants/dispersants, par une interface insuffisante entre les NTC et la matrice, ou encore par l'utilisation d'un taux élevé de NTC.

Une alternative consiste à utiliser des renforts conventionnels comme par exemple les particules et fibres de carbure de silicium (SiC), d'alumine ($Al_2O_3$), de fibres de carbone, à la surface desquels on synthétise des nanotubes de carbone (NTC). Dans le contexte de l'invention les termes « synthétiser », « déposer » ou encore « faire croître » peuvent être utilisés pour désigner le même phénomène, à savoir, synthétiser des NTC qui se déposent directement à la surface du matériau/renfort.

A ce jour, les procédés existants pour synthétiser/faire croître des NTC à la surface des renforts ne donnent pas entière satisfaction pour au moins l'une des raisons suivantes :

- les procédés connus ne sont pas toujours adaptés au traitement des renforts de géométrie variable (fibre courte, fibre longue ou continue, particules etc.) en grande quantité et/ou « en continu » et nécessite notamment l'interruption de la production lorsque l'on souhaite renouveler les renforts à traiter (cas de particules et fibres courtes) et/ou conserver l'intégralité des renforts (cas de fibres longues) ce qui rend leur utilisation industrielle prohibitive ;
- les procédés existants ne permettent pas une homogénéité notamment en diamètre, en densité (nombre de NTC par unité de surface) et en arrangement, des NTC déposés. Cette homogénéité peut affecter la qualité de l'interface entre les NTC et le renfort et donc la qualité et les propriétés des composites ;

- les conditions opératoires comme par exemple la température, la nature et/ou la quantité des précurseurs chimiques utilisés dans certains procédés peuvent ne pas convenir à tous les types de renforts utilisés entraînant ainsi l'endommagement de certains renforts ;
- la nature toxique et/ou polluante de certains précurseurs chimiques utilisés peut quelquefois rendre certains procédés non industrialisables ;
- les procédés ne sont pas toujours reproductibles.

Il existe donc un réel besoin d'un procédé de synthèse de nanotubes de carbone (NTC) à la surface d'un matériau, notamment un matériau pouvant être utilisé comme renfort, par exemple dans les matériaux composites, palliant les défauts, inconvénients et obstacles de l'art antérieur.

Plus particulièrement, il existe un réel besoin d'un procédé de synthèse de nanotubes de carbone à la surface d'un matériau, notamment un matériau pouvant être utilisé comme renfort, par exemple dans les matériaux composites, qui soit reproductible, industriellement réalisable et économiquement intéressant et qui évite de recourir à des précurseurs chimiques toxiques et polluants.

De plus, il existe un besoin réel de disposer d'un procédé de synthèse de nanotubes de carbone à la surface d'un matériau, notamment un matériau pouvant être utilisé comme renfort, par exemple dans les matériaux composites :

- qui puisse convenir aux différents types et géométries de matériaux/renforts à traiter (fibres courtes, longues, particules, etc.) ;
- qui permette une homogénéité notamment en diamètre, en densité et en arrangement des NTC déposés ;
- qui permette de moduler les paramètres du procédé afin d'adapter l'homogénéité, le diamètre et la densité des NTC à l'application visée ;
- qui n'endommage pas le matériau/renfort à la surface duquel les NTC sont à déposer.

Par ailleurs, il existe un besoin réel de disposer d'un procédé de synthèse de NTC à la surface d'un matériau :

- qui conduise à un matériau/renfort comportant à sa surface des NTC utilisable directement par exemple pour la préparation des composites structuraux, ou
- qui soit compatible avec tout traitement ultérieur du matériau/renfort à la surface duquel les NTC ont été déposés, par exemple lorsqu'on souhaite renforcer l'adhésion des NTC sur ledit matériau/renfort.

**Description de l'invention**

La présente invention a précisément pour but de répondre à ce besoin en fournissant un procédé de synthèse de nanotubes de carbone (NTC) à la surface d'un matériau, comprenant les étapes suivantes réalisées sous un courant de gaz inerte(s) éventuellement en mélange avec de l'hydrogène :

(i) chauffage dans une enceinte réactionnelle du matériau, à la surface duquel les NTC sont à synthétiser, à une température allant de 350°C à 850°C, par exemple de 400 à 780°C ;
(ii) introduction dans ladite enceinte, d'une source de carbone constituée d'acétylène et de xylène, et d'un catalyseur comprenant du ferrocène ;
(iii) exposition du matériau chauffé à la source de carbone et au catalyseur comprenant du ferrocène pendant une durée suffisante pour obtenir des nanotubes de carbone (NTC) à la surface dudit matériau ;
(iv) récupération éventuellement après refroidissement du matériau comprenant à sa surface des nanotubes de carbone (NTC), à l'issue de l'étape (iii).

Par « nanotube » on entend, au sens de la présente description, une structure tubulaire à base de carbone, et qui possède un diamètre compris entre 0,5 et 100 nm. Ces composés appartiennent à la famille dite des « matériaux nanostructurés », qui présentent au moins une dimension caractéristique de l'ordre de nanomètre. Pour plus de détail concernant ces matériaux et leur mode de synthèse, on pourra notamment se reporter à l'article « Nanotubes from carbon » de P.M. Ajayan [1].

Dans le cadre de la présente invention, les termes « matériau », « renfort » ou « matériau/renfort » sont indifféremment utilisés pour désigner un matériau pouvant être utilisé pour assurer par exemple aux matériaux composites des propriétés physiques et mécaniques comme par exemple la résistance à la traction, à la flexion et à la compression, rigidité et durée de vie, allégement du poids spécifique, résistance à la corrosion, conductivité électrique et thermique et blindage des ondes électromagnétiques etc.

Le procédé de l'invention présente l'avantage de convenir à tout type de matériau, quelle que soit sa structure : fibres courtes, longues ou continues, particules. Dans le contexte de l'invention, une fibre est dite « longue ou continue » lorsque sa longueur est égale ou supérieure à 10 cm et une fibre est dite courte lorsque sa longueur est inférieure à 10 cm.

Le procédé peut être similaire lorsqu'il s'agit de synthétiser des NTC à la surface des particules et des fibres courtes.

Le procédé de l'invention convient plus particulièrement aux fibres longues ou continues.

Le catalyseur peut comprendre exclusivement du ferrocène. Il peut également comprendre du ferrocène éventuellement en mélange avec un autre catalyseur choisi dans le groupe organométallique comprenant le phtalocyanine, le pentacarbonyle de fer.

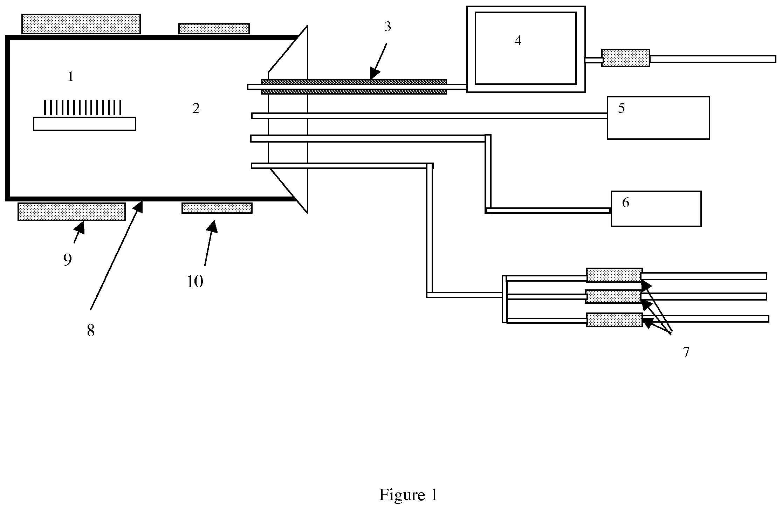

L'enceinte réactionnelle peut être tout dispositif permettant une introduction simultanée et contrôlée des précurseurs chimiques, muni d'au moins un four avec un système de circulation des gaz et d'au moins un débitmètre gaz et liquide permettant de mesurer et de contrôler les débits des gaz et des liquides. Des exemples de dispositifs pouvant convenir à la mise en oeuvre du procédé de l'invention sont indiqués dans les figures 1, 2 et 3.

Le matériau dans l'étape (i) peut se présenter sous forme de fibres de diamètre de 1 à 100 $\mu$m, plus particulièrement de 4 à 50 $\mu$m ou de particules de diamètre de 0,1 à 100 $\mu$m, plus particulièrement de 0,4 à 50 $\mu$m.

Dans un mode de réalisation particulier de l'invention, dans l'étape (i), le matériau se présente sous forme de fibres longues, telles que définies précédemment, avec un diamètre 4 à 50 $\mu$m.

Le procédé de synthèse des NTC selon l'invention a l'avantage de pouvoir être mis en oeuvre en continu. Par procédé de synthèse en continu, on entend un procédé dans lequel l'introduction des matériaux/renforts à la surface desquels les NTC sont à synthétiser, ne nécessite pas l'arrêt de l'équipement ni l'interruption de la production.

Un procédé en continu est particulièrement intéressant dans le cas où le matériau à traiter est une fibre longue telle que définie précédemment.

Le matériau à traiter est choisi parmi ceux capables de supporter la température de dépôt des NTC.

Le matériau dans l'étape (i) est choisi dans le groupe comprenant :

- des fibres de carbone, de verre, d'alumine, de carbure de silicium (SiC), de roche ;
- des matériaux céramiques choisis dans le groupe comprenant des particules et fibres de nitrure de silicium ($Si_3N_4$), carbure de bore ($B_4C$), carbure de silicium (SiC), carbure de titane (TiC), cordiérite ($Al_3Mg_2AlSi_5O_{18}$), mullite ($Al_6Si_2O_{13}$), nitrure d'aluminium (AlN), nitrure de bore (NB), alumine ($Al_2O_3$), borure d'aluminium ($AlB_2$), oxyde de magnésium (MgO), oxyde de zinc (ZnO), oxyde magnétique de fer ($Fe_3O_4$) zircone ($ZrO_2$), silice ($SiO_2$), fumées de silice, CaO, $La_2CuO_4$, $La_2NiO_4$, $La_2SrCuO_4$, $Nd_2CuO_4$, $TiO_2$, $Y_2O_3$, silicates d'aluminium (argiles).

Les performances améliorées du procédé de l'invention peuvent être expliquées par la mise en oeuvre de la combinaison spécifique : acétylène, xylène et ferrocène. En modifiant les paramètres physiques de ces précurseurs chimiques (la température, le débit des gaz etc.), on obtient un procédé qui peut convenir au traitement de tout type de renfort et qui permet également de contrôler la morphologie notamment le diamètre, la densité et l'arrangement des NTC déposés.

Quelques uns des avantages inattendus du procédé de l'invention liés à l'utilisation d'acétylène et de xylène comme source de carbone conjointement avec le ferrocène en tant que catalyseur à base de fer, peuvent être résumés de manière suivante :

1. L'utilisation simultanée de l'acétylène et du xylène comme source de carbone et l'adaptation de leur débit, permet une homogénéité notamment en diamètre et en arrangement des NTC synthétisés à la surface des renforts et le nombre de NTC par unité de surface. Par arrangement des NTC, il est entendu la disposition spatiale (par exemple l'angle de croissance) des NTC et/ou l'homogénéité surfacique du dépôt des NTC.

2. L'utilisation d'une source de carbone constituée de l'acétylène en combinaison avec le xylène permet d'obtenir une croissance de NTC sur les renforts avec une plus grande homogénéité en diamètre et en densité (nombre de NTC par $\mu m^2$) qu'avec une source de carbone constituée seulement de xylène ou d'acétylène. Par exemple il a été observé que les fibres de carbone sont traitées dans toute l'épaisseur et la longueur de la mèche et que les particules, par exemple les particules céramiques, lorsqu'elles sont sous forme de poudre, sont mieux traitées dans la masse de poudre déposée dans le réacteur. Cette homogénéité en diamètre et en densité est très importante pour la qualité et les propriétés des composites comportant ces renforts. Cette homogénéité est beaucoup plus grande que, par exemple, la combinaison xylène et ferrocène, préconisée par de nombreuses études [2].

3. La combinaison de xylène et d'acétylène comme source de carbone permet aussi de synthétiser les NTC à une température moins élevée qu'avec le xylène seul (par exemple à partir de 350°C au lieu de 750°C à 810°C avec le xylène), ce qui permet par exemple le greffage des fibres de verre ($SiO_2$) sans endommagement de celles-ci. Par ailleurs, il a été observé que lorsque la source de carbone est constituée d'acétylène et de xylène, la concentration de benzène et/ou de toluène (toxiques) émise est sensiblement moindre que les procédés n'utilisant que le xylène. Dans certains cas cette émission peut être nulle.

4. L'utilisation du ferrocène comme catalyseur, en association avec le xylène et l'acétylène, présente l'avantage de diminuer le risque de détérioration des propriétés mécaniques des matériaux notamment des fibres de carbone et de verre, par rapport aux catalyseurs à base de nickel préconisés par différentes études de croissance de NTC sur fibre de carbone ou de verre, et ce à des températures de dépôt plus élevées et avec des temps de traitement plus longs. Selon une étude récente, la résistance mécanique des fibres traitées a chuté de 50% après le traitement de croissance de NTC [4].

L'utilisation du ferrocène permet, en outre, d'éviter le recours à des composants à la toxicité connue. En effet, il a été montré que les nanoparticules de nickel et de cobalt sont des catalyseurs satisfaisants [3] mais dont la toxicité est avérée.

Dans l'étape (ii), l'acétylène est introduit dans l'enceinte réactionnelle sous forme de gaz avec une vitesse linéaire de $5,0 \times 10^{-6}$ à $1,0 \times 10^{-1}$ m/s, plus particulièrement $1,0 \times 10^{-5}$ à $5,0 \times 10^{-3}$ m/s. On entend par « vitesse linéaire », la distance parcourue par l'acétylène en 1 seconde. La vitesse linéaire se détermine en fonction du débit de l'acétylène et du volume de l'enceinte réactionnelle. Par exemple, pour un tube de diamètre intérieur de 45 mm, un débit de gaz à 1 l/min correspond à une vitesse linéaire de 0,0095 m/s. Ceci est vrai pour tous les gaz utilisés dans le cadre de la présente invention.

L'acétylène est introduit en une quantité supérieure à 0 et pouvant aller jusqu'à 20% en volume du gaz total. Il peut encore être introduit par exemple en une quantité allant de 0,1 à 10% en volume du gaz total.

Dans l'étape (ii), le xylène est introduit dans l'enceinte réactionnelle sous forme de liquide éventuellement en mélange avec le ferrocène.

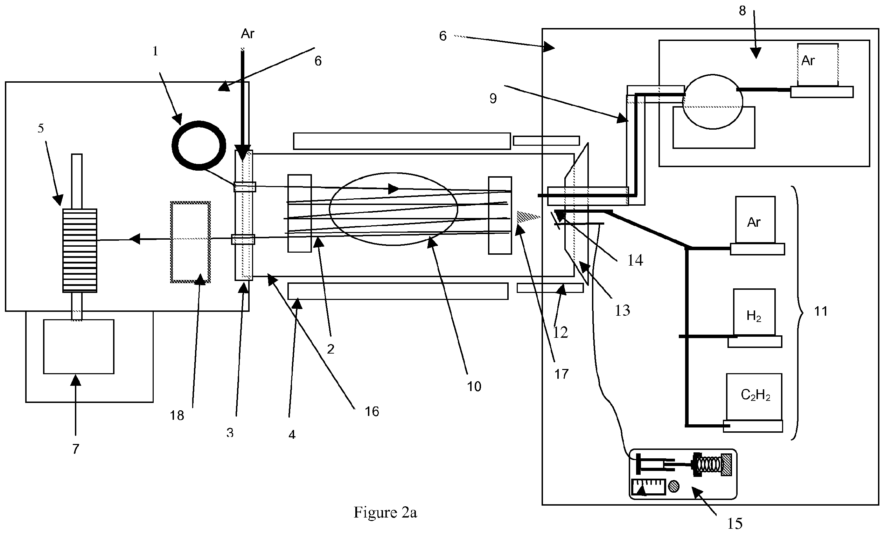

Lorsque le ferrocène est introduit par vaporisation (Figure 2a), le xylène est introduit seul.

Le système utilisé pour l'introduction de xylène, seul ou en mélange avec le ferrocène, peut être tout système permettant son injection par exemple un atomiseur, un vaporisateur, un nébulisateur, un aérobrumisateur.

Le débit du xylène, seul ou en mélange avec le ferrocène, peut être compris entre 5 et 40ml/h, par exemple entre 10 et 25 ml/h pour un tube CVD de diamètre 45 mm environ.

Un avantage d'une introduction indépendante du ferrocène et de la source de carbone est la possibilité de choisir le moment de l'introduction de l'un par rapport à l'autre et la quantité relative de l'un par rapport à l'autre.

Selon un mode de réalisation particulier de l'invention, le xylène est introduit sous forme liquide en mélange avec le ferrocène. Ceci permet d'apporter une solution technique intéressante pour introduire le ferrocène, en le dissolvant dans le xylène liquide, pour une synthèse en présence d'acétylène.

La teneur en ferrocène dans ce mélange est comprise entre 0,001 à 0,3 g de ferrocène/ml de xylène, par exemple entre 0,001 et 0,2 g de ferrocène/ml de xylène, plus particulièrement entre 0,01 et 0,1 g de ferrocène/ml de xylène. Le mélange xylène-ferrocène peut alors être introduit avec un débit de 0,1 à 20 ml/h.

Comme indiqué précédemment, dans l'étape (ii) le ferrocène peut également être introduit seul dans l'enceinte. Dans ce cas, préalablement à son introduction, le ferrocène est vaporisé et c'est la vapeur de ferrocène qui est introduite dans l'enceinte réactionnelle par exemple par le flux de gaz, par exemple d'argon.

Dans l'étape (iii), le matériau chauffé est exposé à la source de carbone et au catalyseur pendant une durée de 1 à 120 minutes. Cette durée peut encore être de 5 à 90 minutes, par exemple de 5 à 30 minutes. L'homme du métier saura adapter cette durée selon d'une part la taille et la densité des NTC recherchées et d'autre part le matériau et le risque de dégradation dudit matériau lors du traitement.

Dans l'étape (iv), le matériau obtenu à l'issue de l'étape (iii), qui comprend à sa surface des NTC, peut être récupéré sans refroidissement préalable, par exemple à la sortie du réacteur lorsque la synthèse est « en continu », ou est récupéré après refroidissement par exemple à une température de 15 à 35°C.

Toutes les étapes (i) à (iv) sont réalisées sous un courant de gaz inerte(s) éventuellement en mélange avec de l'hydrogène avec un rapport hydrogène/gaz inerte(s) de 0/100 à 50/50, par exemple de 0/100 à 40/60.

Les gaz inertes peuvent être choisis dans le groupe comprenant l'hélium, le néon, l'argon, l'azote et le krypton.

La mise en oeuvre des dispositions qui précèdent permet, en contrôlant la croissance des NTC à la surface du matériau/renfort, d'améliorer notamment les propriétés d'interface entre les NTC et les renforts et les propriétés des composites en assurant une bonne dispersion des NTC dans la matrice.

A l'issue de l'étape (iv), le matériau comprenant à sa surface des nanotubes de carbone peut être utilisé tel quel dans les différentes applications envisagées.

En variante, pour des applications qui nécessitent une liaison particulièrement forte entre les NTC et le matériau/renfort, il est possible de prévoir une étape supplémentaire dans laquelle soit on applique un traitement thermique permettant de créer des nanosoudures entre les NTC et le matériau/renfort soit on effectue un dépôt de polymère conducteur biocompatible sur le matériau obtenu à l'étape (iv).

Selon cette variante, lorsqu'il s'agit de dépôt de polymère conducteur biocompatible sur des fibres longues, le dépôt du polymère se fera en continu, par exemple dans les zones indiquées dans les figures 2a (18) et 2b (17).

Ainsi, l'adhésion des NTC sur les matériaux/renforts se trouve davantage renforcée et consolidée. Cette opération de renforcement contribue à la sécurité et à la protection des utilisateurs et par conséquent les contraintes liées à l'hygiène et la sécurité seront allégées. Elle permet également d'éviter l'éventuel détachement des NTC qui peut se produire lors de la manipulation, l'utilisation et le transport desdits renforts pour la préparation des matériaux, par exemple des matériaux composites, à grande échelle et leur utilisation directe.

De plus, le dépôt d'un polymère conducteur biocompatible sur le matériau obtenu à l'étape (iv), permet d'obtenir un matériau/renfort qui peut assurer au matériau final par exemple le matériau composite un niveau de conductivité plus élevé, par exemple un niveau de conductivité égal ou supérieur à 0,1 S /cm.

Plusieurs voies sont possibles, notamment pour les fabricants de fibres, pour déposer une couche de polymère à la surface des matériaux comportant des NTC à leur surface. L'une de ces voies est l'utilisation d'un ensimage classique, en général époxy, polyuréthanne ou polyvinylpyrrolidone (PVP). Un inconvénient de cette voie est qu'elle intercale une couche isolante électrique entre le renfort comprenant à sa surface des NTC et l'environnement dans lequel il se trouve, par exemple la matrice du matériau composite, ce qui augmente la résistance aux contacts du renfort entraînant ainsi une diminution de la conductivité électrique et thermique des matériaux finaux.

Une alternative prometteuse pour la réalisation de cette étape supplémentaire est donc le dépôt d'une couche d'un polymère conducteur biocompatible sur le matériau obtenu à l'étape (iv). Le polymère conducteur biocompatible peut être un polymère conducteur électronique (PCE) et/ou un polymère conducteur thermique (PCT). Cette étape permet de conférer au matériau obtenu à l'étape (iv), des propriétés nouvelles et multifonctionnelles comme par exemple des propriétés électriques, thermiques, optiques, électromagnétiques etc.

Parmi les familles de polymères conducteurs biocompatibles, on peut citer par exemple les polyacétylènes, les polypyrroles, les polythiophènes, les polyanilines et les polyvinyles de para-phénylène. Le polymère conducteur biocompatible peut, en outre, être fonctionnalisé pour une matrice donnée.

L'invention concerne également le matériau comprenant à sa surface des nanotubes de carbone (NTC) susceptible d'être obtenu par un procédé selon l'invention.

Le matériau comprenant à sa surface des NTC susceptible d'être obtenu par un procédé selon l'invention peut être sous forme de fibres courtes (avec une longueur inférieure à 10 cm), de fibres longues ou continues (avec une longueur égale ou supérieure à 10 cm), ou encore sous forme de particules.

Le matériau ou renfort obtenu selon le procédé de l'invention possède en sa surface des NTC et ce, avec une bonne et reproductible homogénéité en diamètre et en densité (exprimée notamment en nombre de NTC par $\mu m^2$). Ainsi, le nombre de NTC par $\mu m^2$ à la surface du matériau/renfort de l'invention peut être compris entre 5 et 200 par $\mu m^2$, par exemple, entre 30 et 60 par $\mu m^2$.

Généralement, le matériau de l'invention présente une prise de masse, due au dépôt des NTC, comprise entre 0,2 et 80% par rapport à la masse du matériau de départ. Lorsque le matériau de l'invention est sous forme de fibres, la prise de masse est plus particulièrement comprise entre 0,2 et 10%, par exemple entre 0,5 et 5%, par rapport à la masse du matériau de départ. Lorsque le matériau de l'invention est sous forme de particules, la prise de masse est plus particulièrement comprise entre 5 et 50%, par exemple entre 10 et 40% par rapport à la masse du matériau de départ.

Le matériau de l'invention peut présenter également une surface spécifique supérieure à 150 $m^2/g$, par exemple comprise entre 150 et 2000 $m^2/g$, par exemple entre 200 et 1000 $m^2/g$. Au sens de la présente description, le terme « surface spécifique » se réfère à la surface spécifique BET, telle que déterminée par adsorption d'azote, selon la méthode bien connue dite de BRUNAUER - EMMET - TELLER qui est décrite dans The journal of the American Chemical Society, volume 60, page 309 51938 et correspondant à la norme internationale ISO 5794/1.

L'invention s'étend également au matériau comprenant à sa surface des nanotubes de carbone (NTC) susceptible d'être obtenu par un procédé selon l'invention, et un polymère conducteur biocompatible déposé à la surface des NTC.

Les matériaux/renforts selon la présente invention peuvent être utilisés dans toutes les applications où de tels matériaux/renforts sont mis en oeuvre. Ils sont plus particulièrement utilisés comme renforts pour la préparation de matériaux composites, notamment dans des domaines où leurs propriétés électriques sont recherchées et/ou dans des domaines où leurs propriétés mécaniques sont recherchées.

Les matériaux composites comprenant des matériaux/renforts de l'invention, peuvent être destinés par exemple à l'industrie de l'automobile, de l'aéronautique et spatiale, aux équipements sportifs, ou encore aux équipements électroniques.

Ils peuvent également être utilisés pour la préparation de composants électrochimiques notamment l'électrode à large surface pour sa grande résistance à la corrosion.

Ils peuvent permettre d'obtenir la structure particulière de matériaux de filtration et/ou de dépollution notamment de l'air, des eaux usées, de gaz à haute température.

Du fait du caractère biocompatible du carbone, les matériaux/renforts de l'invention peuvent notamment être employés pour la préparation de biomatériaux et de prothèses.

Compte tenu de sa surface spécifique élevée, le matériau selon l'invention peut être utilisé pour la préparation de supports de catalyseur, par exemple pour la catalyse hétérogène.

Il peut en outre être utilisé pour la préparation de tissus ou de vêtements à haute performance.

Enfin, lorsque le matériau de l'invention n'est pas sous forme de fibre longue telle que définie précédemment, il peut être utilisé comme renfort pour la préparation de peintures et vernis.

D'autres avantages pourront encore apparaître à l'homme du métier à la lecture des exemples ci-dessous, illustrés par les figures annexées, donnés à titre illustratif.

**Brève description des figures**

☐ La figure 1 représente le schéma d'un montage utilisé pour la synthèse de nanotubes de carbone sur renforts longs (fibres longues) et particulaires par le procédé selon l'invention. Les différentes parties de ce montage sont :

1 représente la zone de synthèse,
2 représente la zone de préparation : préchauffage, décomposition, mélange et homogénéisation des gaz,
3 représente le tube chauffant assurant le transit de la vapeur de ferrocène sans condensation,
4 représente l'enceinte de vaporisation du ferrocène,
5 représente l'enceinte contenant le mélange de xylène et de ferrocène
6 représente l'enceinte contenant le xylène
7 représente 3 débitmètres massiques numériques contrôlant les débits de l'argon, l'acétylène et l'hydrogène,
8 représente un tube de quartz,
9 représente le four n°1,
10 représente le four n°2.

☐ La figure 2a représente le schéma d'un montage utilisé pour la synthèse de nanotubes de carbone en continu sur fibres. Dans ce montage, le ferrocène est utilisé seul et, est vaporisé préalablement à son introduction. Les différentes parties de ce montage sont :

1 représente la bobine de fibres commerciales,
2 représente la zone de circulation dans laquelle les fibres circulent pouvant faire jusqu'à 4 aller-retour ou plus,
3 représente le sas, muni d'un bouchon et d'entrées-sorties prévues pour les fibres et l'injection de gaz inerte,
4 représente le four 1,
5 représente la bobine de fibres traitées et stockées,
6 représente l'enceinte de confinement,
7 représente le système de trancanage qui permet notamment d'enrouler correctement des fibres en bobines en respectant le pas d'enroulement,
8 représente le dispositif d'injection du ferrocène en phase vapeur en présence de l'argon (Ar),
9 représente le tuyau permettant d'injecter la vapeur de ferrocène « en continu » sans condensation,
10 représente la zone de traitement ou de synthèse,
11 représente 3 débitmètres massiques numériques contrôlant les débits d'argon (Ar), d'hydrogène ($H_2$), et d'acétylène ($C_2H_2$),
12 représente le four 2,
13 représente le bouchon,
14 représente le système pour l'atomisation de xylène,
15 représente le système pousse seringue et le réservoir de xylène,
16 représente le réacteur CVD par exemple en tube quartz,
17 représente le liquide atomisé,
18 représente la zone pour le dépôt d'un polymère conducteur biocompatible en continu.

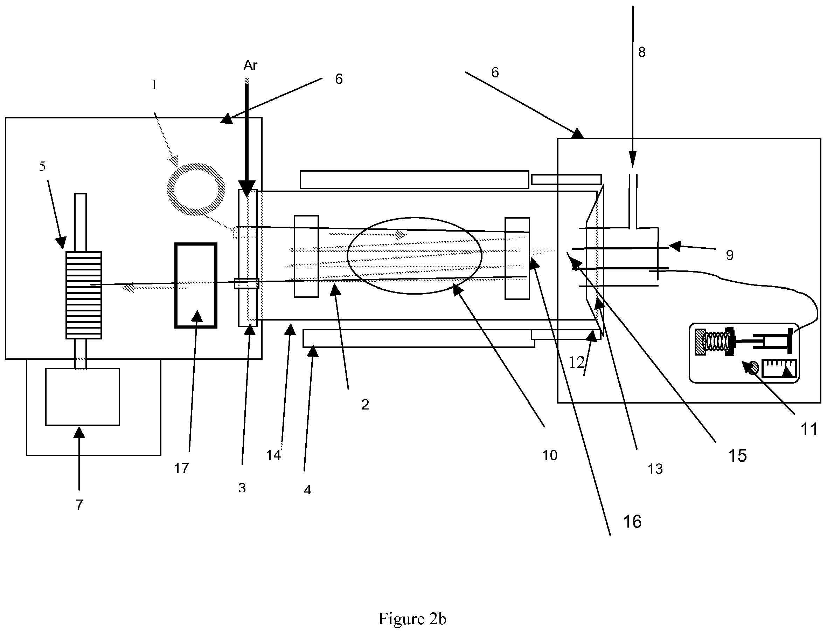

☐ La figure 2b représente le schéma d'un montage utilisé pour la synthèse de nanotubes de carbone en continu sur fibres. Dans ce montage, le ferrocène est utilisé en mélange avec le xylène. Le mélange ferrocène-xylène est introduit via un système d'injection. Les différentes parties de ce montage sont :

1 représente la bobine de fibres commerciale,
2 représente la zone de circulation dans laquelle les fibres circulent pouvant faire jusqu'à 4 aller-retour ou plus,
3 représente le sas muni d'un bouchon et d'entrées-sorties prévues pour les fibres et l'injection de gaz inerte,
4 représente le four 1,
5 représente la bobine de fibres traitées et stockées,
6 représente l'enceinte de confinement,
7 représente le système de trancanage qui permet notamment d'enrouler correctement des fibres en bobines en respectant le pas d'enroulement,

8 représente la zone d'injection d'hydrogène et d'argon,

9 représente la zone d'injection d'acétylène et d'argon,

10 représente la zone de traitement ou de synthèse,

11 représente le système pousse seringue et le réservoir du mélange liquide xylène -ferrocène,

12 représente le four 2,

13 représente le bouchon,

14 représente le réacteur CVD par exemple en tube quartz,

15 représente le dispositif d'atomisation du mélange liquide xylène-ferrocène,

16 représente le liquide atomisé,

17 représente la zone pour le dépôt d'un polymère conducteur biocompatible en continu.

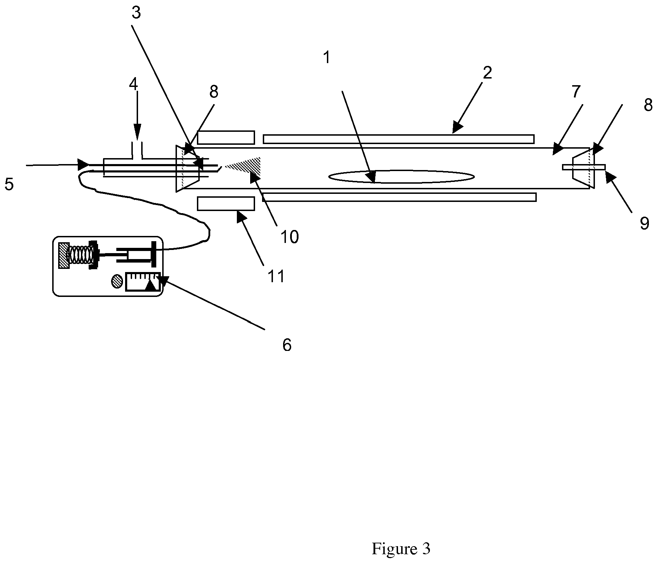

☐ La figure 3 représente le schéma d'un montage utilisé pour la synthèse de nanotubes de carbone à la surface des particules. Les différentes parties de ce montage sont :

1 représente les particules,

2 représente le four,

3 représente le dispositif d'injection par un système composé de 2 tubes inox de diamètre interne de 0,5 mm dont l'un pour le liquide et l'autre pour le gaz,

4 représente la zone d'injection d'hydrogène et d'argon,

5 représente la zone d'injection d'acétylène et d'argon,

6 représente le système pousse seringue et le réservoir du mélange liquide xylène - ferrocène.

7 représente le réacteur CVD par exemple en tube quartz

8 représente les bouchons

9 représente la sortie du gaz usé

10 représente le liquide atomisé

11 représente le four n°2.

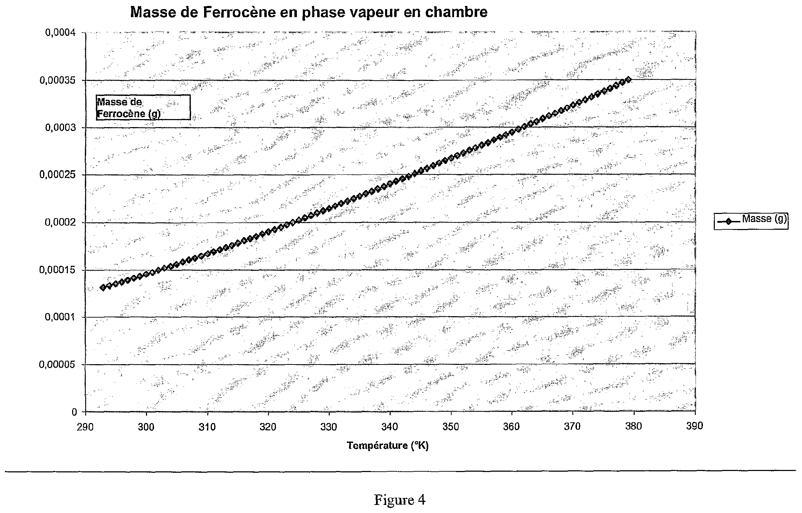

☐ La figure 4 représente la masse de ferrocène sous forme vapeur (M exprimée en grammes), en fonction de la température de la chambre de vaporisation (T exprimée en degré Kelvin).

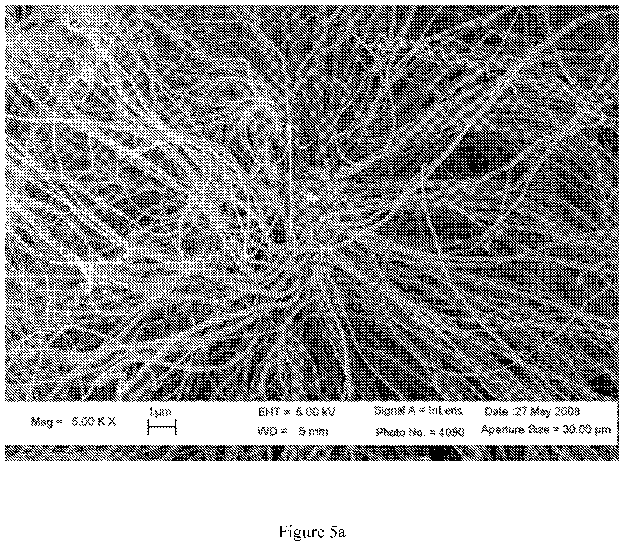

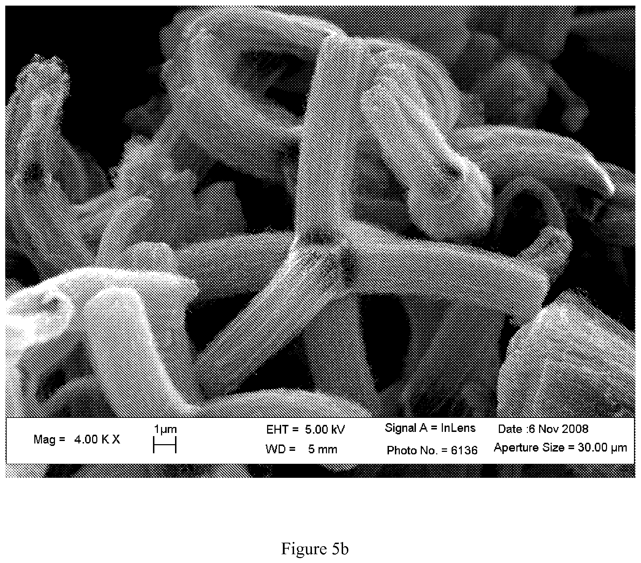

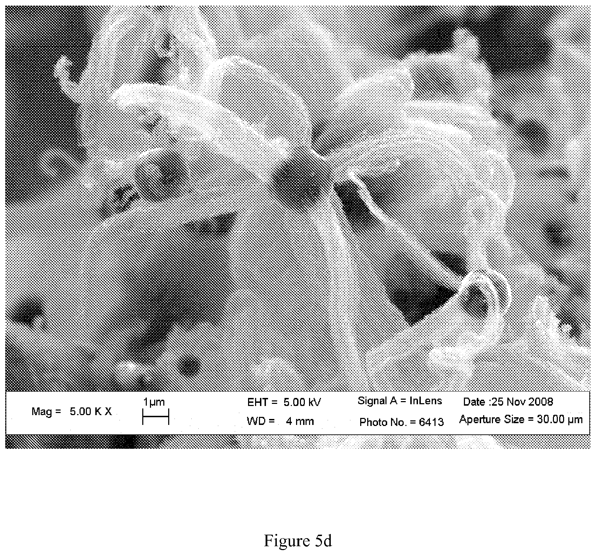

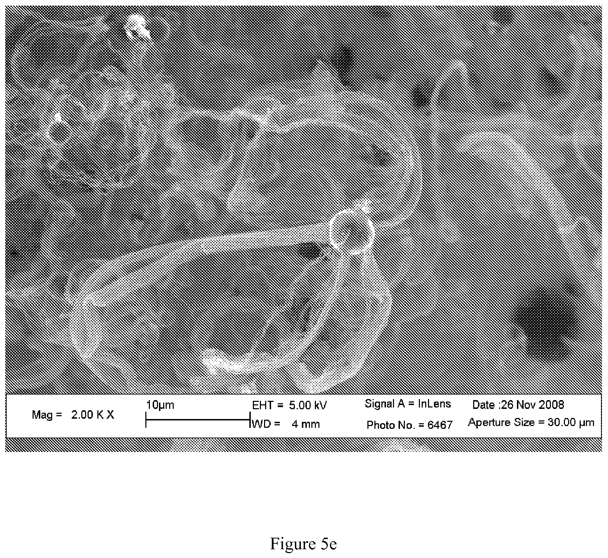

☐ Les figures 5a, 5b, 5d, et 5e représentent les photographies en microscopie électronique à balayage des particules de dioxyde de titane de l'exemple 1, après le dépôt des NTC à leur surface par le procédé de l'invention, à faible et fort grossissement respectivement.

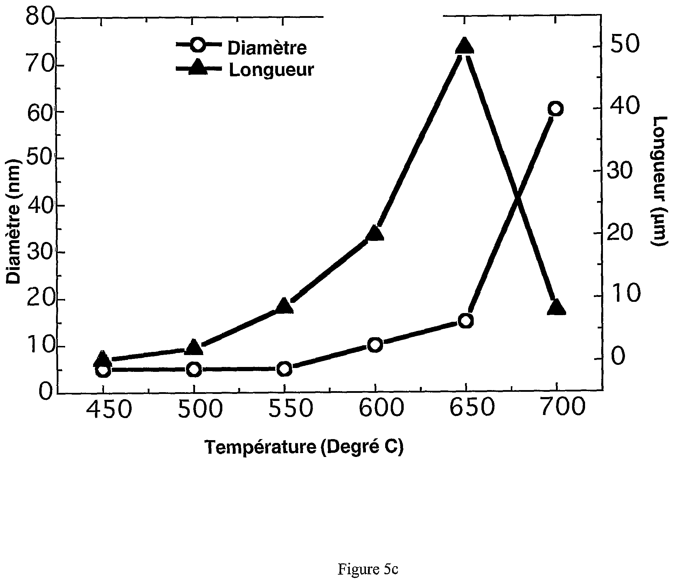

☐ La figure 5c est une représentation de l'évolution du diamètre et de la longueur des NTC en fonction de la température de synthèse. D, exprimé en nm correspond au diamètre des NTC ; L, exprimée en $\mu$m, correspond à la longueur des NTC ; T, exprimée en °C, correspond à la température de la synthèse par dépôt chimique en phase vapeur (CVD en anglais). Les ronds représentent le diamètre des NTC et les triangles la longueur des NTC).

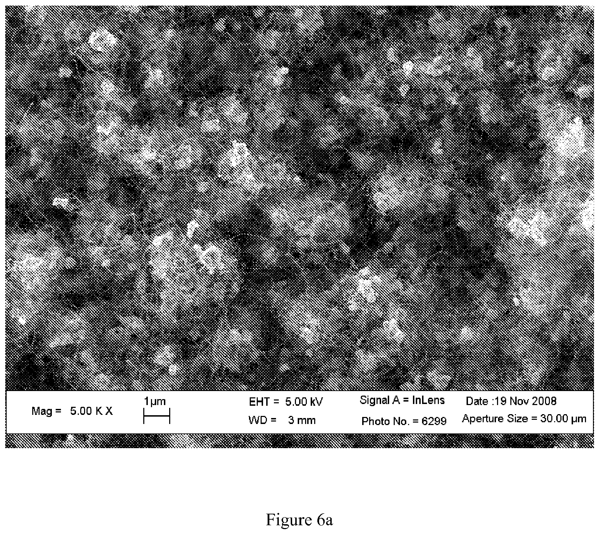

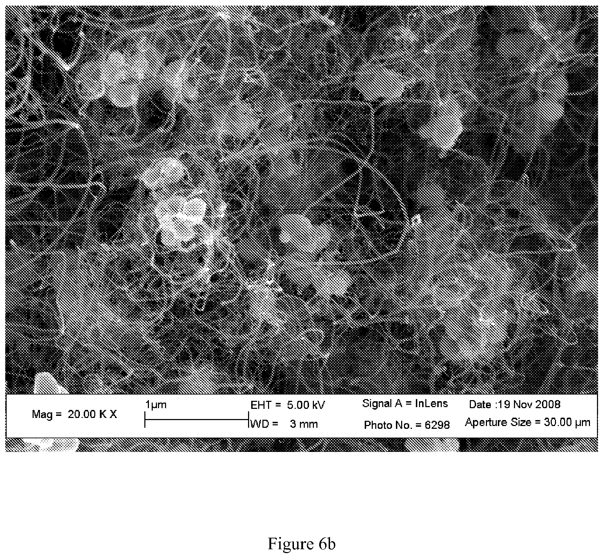

☐ Les figures 6a et 6b représentent les photographies en microscopie électronique à balayage des particules de dioxyde de titane de l'exemple 2 après le dépôt des NTC à leur surface par le procédé de l'invention à faible et fort grossissement respectivement.

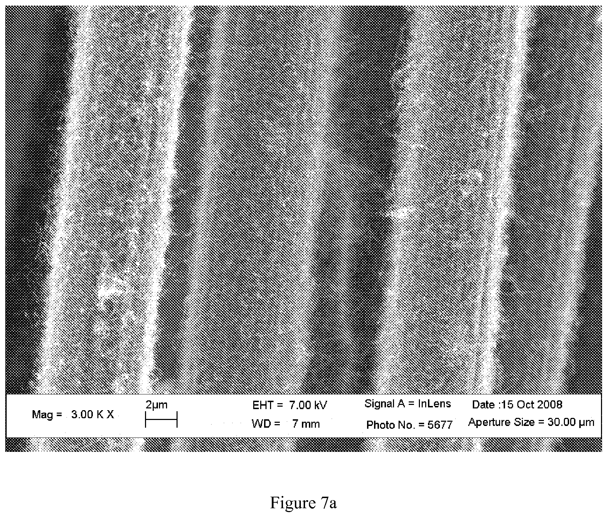

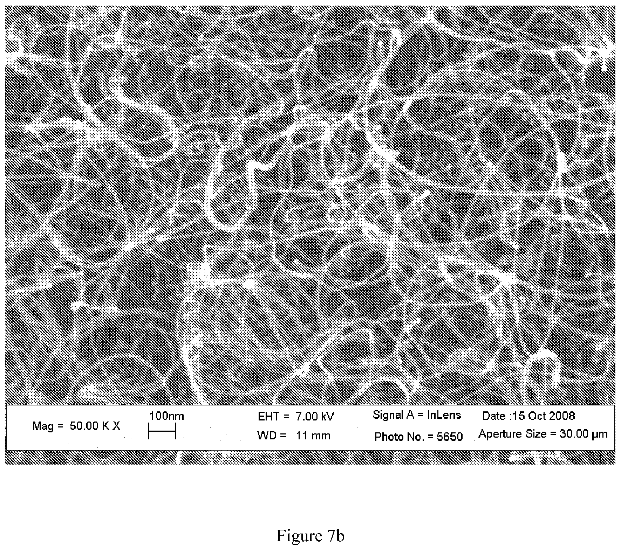

☐ Les figures 7a et 7b représentent les photographies en microscopie électronique à balayage des fibres de carbone de l'exemple 3 après dépôt des NTC à leur surface par le procédé de l'invention à faible et fort grossissement respectivement.

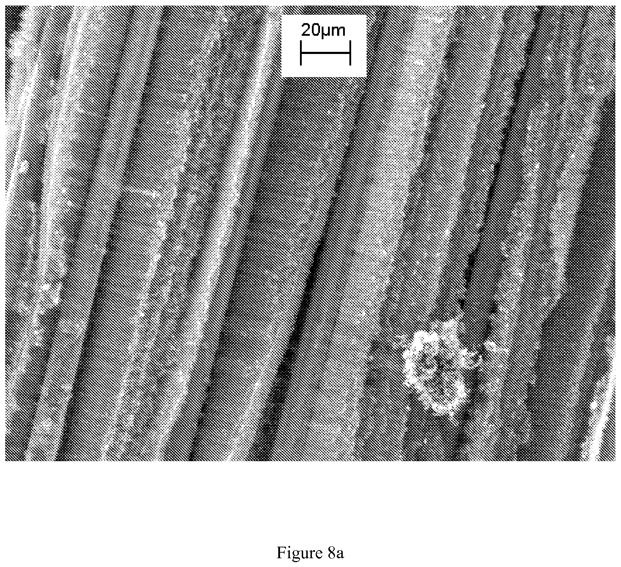

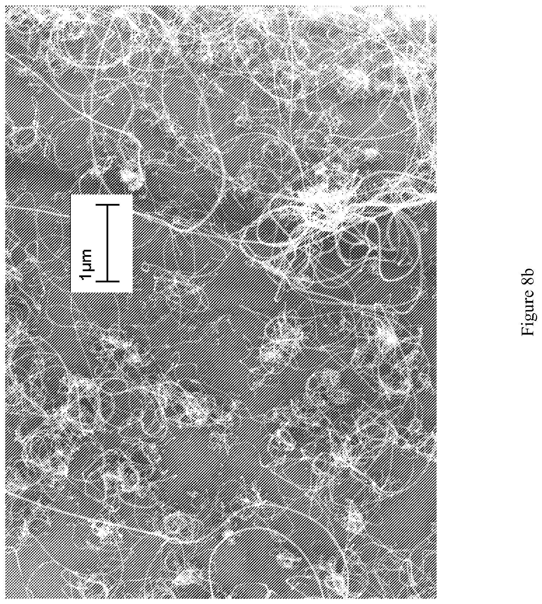

☐ Les figures 8a et 8b représentent les photographies en microscopie électronique à balayage des fibres de verre de l'exemple 4 après dépôt des NTC à leur surface par le procédé de l'invention à forte et faible densité de NTC respectivement.

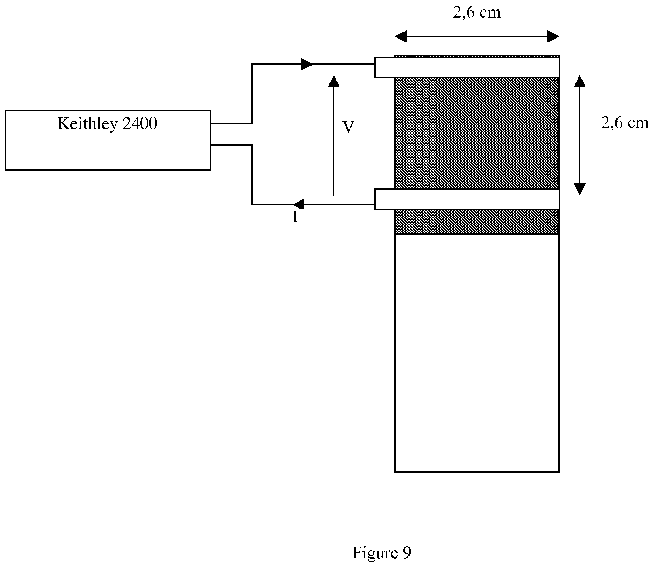

☐ La figure 9 représente le montage permettant de mesurer la résistance de surface de la peinture conductrice de l'exemple 5. Ce montage consiste en deux électrodes de cuivre séparées de 2,6 cm et qui forment un carré de 2,6 cm de coté. Ces deux électrodes sont reliées au Keithley 2400 qui sert simultanément de générateur de tension et d'ampèremètre. L'échantillon de peinture est déposé sur une plaque de verre.

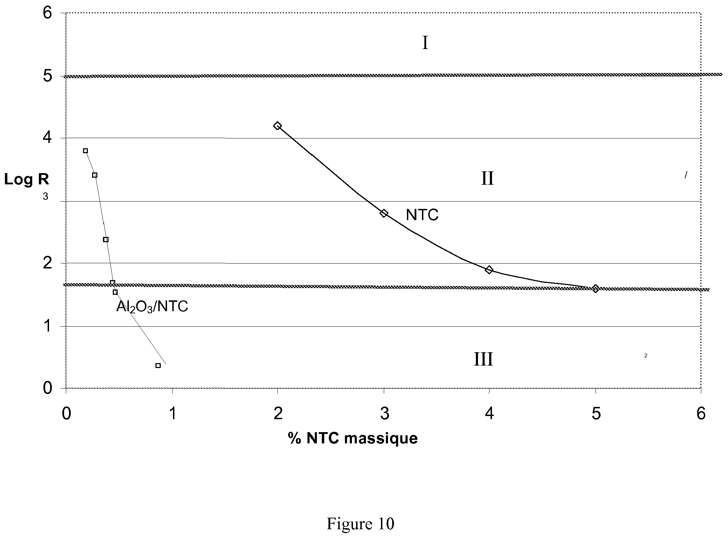

☐ La figure 10 représente la résistance surfacique d'une peinture mesurée en fonction du taux de NTC. Les carrés représentent une peinture conductrice selon l'exemple 5 et les losanges correspondent à une peinture comprenant uniquement des NTC. Sur la figure, la partie I représente la zone « peinture isolante » ; la partie II représente la zone « peinture antistatique avec une résistance R< 100 M$\square$/2 » ; la partie III représente la zone « peinture conductrice avec une résistance R< 50 k$\square$/2».

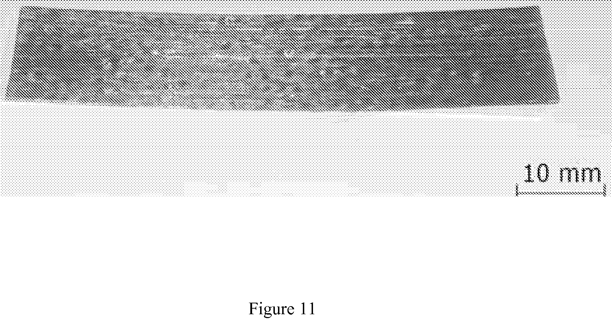

☐ La figure 11 représente un pli composite unidirectionnel T700 /M21 (fibres de carbone sont des fibres Toray T700 GC et la matrice est une résine époxy M21, les deux fournies par la société Hexcel).

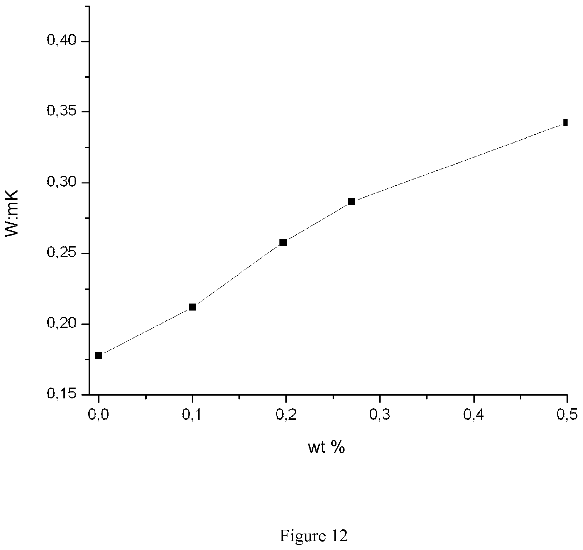

☐ La figure 12 représente la conductivité thermique du composite obtenu dans l'exemple 7 mesurée en fonction de la quantité du renfort (particules d'alumine recouvertes de NTC) présente dans ledit matériau. En ordonnée il s'agit de la conductivité thermique exprimée en W/mK et en abscisse il s'agit de la quantité du renfort exprimé en poucentage en poids par rapport au poids du matériau composite.

## EXEMPLES

### Montages utilisés dans le procédé selon l'invention

Les montages (figures 1 à 3) sont réalisés de manière à contrôler les injections simultanées des précurseurs chimiques et les débits de gaz dans un réacteur du type tube de quartz, dont le chauffage est assuré par un four thermique à résistance commercialisé par la société Carbolite équipé d'un programmeur de température.

Les débits de gaz (acétylène ($C_2H_2$), argon (Ar), hydrogène ($H_2$)) sont mesurés et contrôlés par des débitmètres massiques numériques commercialisés par les sociétés Bronkhorst France et SERV INSTRUMENTATION.

Les débits de précurseurs liquides (xylène, mélange xylène-ferrocène) sont contrôlés avec un mécanisme type pousse seringue médical (commercialisé par la société Razel ou par Fisher Bioblock scientific) ou mélangeur équipé d'un débitmètre liquide (commercialisés par les sociétés Bronkhorst France et SERV INSTRUMENTATION).

Le ferrocène peut être injecté dissout dans le xylène ou bien directement vaporisé et injecté par convection au moyen d'un gaz porteur neutre comme par exemple l'argon, grâce à un dispositif adapté. Dans les exemples, lorsque le ferrocène est directement vaporisé, la vaporisation est effectuée dans une chambre de vaporisation en verre (ballon fond rond tricols 100 ml commercialisé par Fisher bioblock chauffé), la température de vaporisation est de 350°C ; le gaz porteur est l'argon avec un débit de 0,1 à 0,4 l/min.

Plus généralement, pour la vaporisation du ferrocène, un dispositif extérieur au réacteur ou enceinte réactionnelle permet de chauffer le ferrocène afin de le vaporiser. La vapeur est alors injectée par convection : un flux de gaz neutre balaie la chambre de vaporisation.

Pour une température donnée, la quantité de ferrocène vaporisée est proportionnelle au débit du gaz neutre. En prenant en compte la pression de vapeur du ferrocène dans la chambre de vaporisation (P exprimée en mm Hg), la quantité de ferrocène peut être calculée par la relation (1) :

$$(1) \qquad \text{Log P (mm Hg)} = 7{,}615 - 2470 / T \ (°K)$$

La figure 4, représente la masse de ferrocène sous forme vapeur (M exprimée en grammes), en fonction de la température de la chambre de vaporisation (T exprimée en degré Kelvin).

Avec un montage selon la figure 1, il est possible d'adapter les paramètres de la synthèse à chaque type de renforts : renforts longs, courts, particulaires.

La synthèse de NTC sur des renforts a été étudiée selon le procédé de l'invention avec l'acétylène ($C_2H_2$) et le xylène comme précurseur de carbone et le ferrocène comme catalyseur. Une amélioration du procédé en termes de :

- reproductibilité des résultats obtenus ;
- homogénéité du diamètre et de la densité de NTC déposés (nombre par unité de surface qui est ici $\mu m^2$) ;
- diminution de la température de synthèse à une température de 350 à 780°C (au lieu de 650 à 850°C dans les procédés classiques faisant intervenir soit de l'acétylène soit du xylène) ;
- diminution des produits secondaires dangereux (pas ou peu de benzène et de toluène qui sont produits par le procédé utilisant le xylène seul) ;

a été obtenue.

### Procédé de synthèse des NTC « en continu » sur fibres

Les montages utilisés pour la synthèse de nanotubes « en continu » sur fibres sont schématisés dans les figures 2a et 2b.

Le procédé réalise la synthèse de NTC (nanotubes de carbone) par la méthode de dépôt chimique en phase vapeur (CVD) dans un réacteur placé dans un four porté à une température allant de 350°C à 780°C, dans lequel sont injectés « en continu » le gaz acétylène ($C_2H_2$) et le xylène comme source de carbone, et le ferrocène comme catalyseur.

Les fibres sont introduites par un orifice d'entrée situé à une extrémité du réacteur, sont traitées dans la zone de synthèse, et sont ensuite stockées à l'extérieur du réacteur, grâce des mécanismes gérant leur circulation « en continu ».

Un mécanisme interne original, comprenant des jeux de poulies, permet de faire circuler les fibres en maximisant la quantité de fibres traitées simultanément et en prolongeant le temps de séjour des fibres dans le four.

Un système automatisé permet d'assurer une vitesse de défilement continue des fibres dans la zone de traitement (dépôt du catalyseur et synthèse de nanotubes de carbone). Ce système est composé de moteurs électriques commandés avec des cartes électroniques. Un programme permet d'adapter la vitesse de défilement pour obtenir un dépôt satisfaisant et un stockage sur différents rouleaux.

Les débits des gaz sont contrôlés par des débitmètres massiques commerciaux, tandis que le ferrocène est injecté « en continu » par un système original dont le but est de contrôler précisément la quantité ferrocène en phase gazeuse injectée « en continu ». L'alimentation de ferrocène peut être aussi réalisée par l'injection d'une solution ferrocène-xylène.

**Procédé pour la synthèse des NTC sur particules**

Le montage pour le procédé de synthèse des NTC sur particules est schématisé sur la figure 3.

La poudre de particules à traiter est introduite dans le four. Un mécanisme réalise un brassage ou alternativement un autre système réalise la circulation des plateaux contenant des poudres pour obtenir un traitement homogène.

Un montage adapté permet d'injecter simultanément le mélange liquide xylène-ferrocène dissous et l'acétylène. Le débit de liquide est contrôlé avec un mécanisme (type pousse seringue médical ou débitmètre massique liquide), le débit d'acétylène est contrôlé par un débitmètre massique numérique commercialisé par les sociétés Bronkhorst France et SERV INSTRUMENTATION.

Les débits des gaz sont contrôlés par des débitmètres massiques commerciaux, tandis que le ferrocène est injecté « en continu » par un système original dont le but est de contrôler précisément la quantité ferrocène en phase gazeuse injectée « en continu ».

**Exemple 1 : Procédé pour la synthèse des NTC sur des particules d'alumine ($Al_2O_3$)**

Le montage utilisé est celui de la figure 3.

La synthèse des NTC est effectuée sur les particules d'alumine, commercialisées par la société Performance Ceramics. Lesdites particules sont déposées sur une plaque en quartz.

a) Les conditions opératoires sont les suivantes :

- diamètre intérieur du tube quartz utilisé = 45 mm
- température du four 1 = 780°C
- température du four 2 = 250 à 260°C
- débit de gaz = $H_2$ 0,08 l/min, Ar 0,72 l/min, $C_2H_2$ 0,06 l/min,
- durée de synthèse = 20 min
- concentration de ferrocène dans xylène : 0,01 g/ml et débit liquide à 12 ml/h

La figure 5a représente une photographie par microscope à balayage des particules d'alumine après le dépôt des NTC à leur surface à 780°C.

(b) Les conditions opératoires sont les suivantes :

- diamètre intérieur du tube quartz utilisé = 45 mm
- température du four 1 = 550°C
- température du four 2 = 250 à 260°C
- débit de gaz = $H_2$ 0,1l/min, Ar 0,88 l/min, $C_2H_2$ 0,02 l/min
- durée de synthèse = 15 min
- concentration de ferrocène dans xylène : 0,05 g/ml et débit liquide à 12 ml/h.

La figure 5b représente une photographie par microscope à balayage des particules d'alumine après le dépôt des NTC à leur surface à 550°C.

(c) Les conditions opératoires sont les suivantes :

- diamètre intérieur du tube quartz utilisé = 45 mm
- température du four 1 = 550°C

- température du four 2 = 250 à 260°C
- débit de gaz = $H_2O$ l/min, Ar 0,99 l/min, $C_2H_2$ 0,01 l/min
- durée de synthèse = 15 min
- concentration de ferrocène dans xylène : 0,05 g/ml et débit liquide à 12 ml/h

La figure 5d représente une photographie par microscope à balayage des particules d'alumine après le dépôt des NTC à leur surface à 550°C.

(d) Les conditions opératoires sont les suivantes :

- diamètre intérieur du tube quartz utilisé = 95 mm
- température du four 1 = 650°C,
- température du four 2 = 250 à 260°C
- débit de gaz = $H_2$ 0,1 l/min, Ar 0,88 l/min, $C_2H_2$ 0,02 l/min
- durée de synthèse = 30 min
- concentration de ferrocène dans xylène : 0,025 g/ml et débit liquide à 12 ml/h

La figure 5e représente une photographie par microscope à balayage des particules d'alumine après le dépôt des NTC à leur surface à 650°C

**Exemple 2 : Procédé pour la synthèse des NTC sur des particules de dioxyde de titane (TiO$_2$)**

Le montage utilisé est celui de la figure 3.
La synthèse des NTC est effectuée sur les particules de dioxyde de titane (Tiona 595) commercialisées par la société Millenium du groupe Cristal. Lesdites particules sont déposées sur une plaque en quartz.
Les conditions opératoires sont les suivantes :

- diamètre intérieur du tube quartz utilisé = 45 mm
- température du four 1 = 700°C,
- température du four 2 = 250 à 260°C
- débit de gaz = $H_2$ 0,1 l/min, Ar 0,85 l/min, $C_2H_2$ 0,05 l/min,
- durée de synthèse = 25 min
- concentration de ferrocène dans xylène : 0,05 g/ml et débit liquide à 12 ml/h

Les figures 6a et 6b (en plus fort grossissement) représentent des photographies par microscope à balayage des particules de dioxyde de titane après le dépôt des NTC à leur surface à 700°C.

**Exemple 3 : Procédé pour la synthèse des NTC sur des fibres de carbone**

La synthèse est réalisée « en continu » sur les fibres de carbone (Toray T700) en utilisant le montage de la figure 2b placées dans le four et maintenues par le mécanisme de défilement
Les conditions opératoires sont les suivantes :

- diamètre intérieur du tube quartz utilisé = 50 mm
- acétylène = 0,1 l/min
- hydrogène = 0,1 l/min
- argon = 1,0 l/min
- température du four 1 = 650°C
- température du four 2 = 250 à 260°C
- durée de synthèse = 20 min
- vitesse de défilement de fibre = 0,15 m/min
- concentration de ferrocène dans xylène : 0,05 g/ml et débit liquide à 12 ml/h

La figure 7a représente la photographie des fibres de carbone en microscopie électronique à balayage après dépôt des NTC à leur surface par le procédé de l'invention.
La figure 7b représente la photographie des mêmes fibres de carbone après dépôt des NTC en plus fort grossissement.

Les fibres obtenues possèdent en leur surface un nombre de NTC par ☐m☐supérieure à 50 par ☐m☐, un diamètre moyen de 25 nm et une longueur de 10 à 20 ☐m.

**Exemple 4 : Procédé pour la synthèse des NTC sur des fibres de verre**

La synthèse est réalisée « en continu » sur les fibres de verre, commercialisées par la société Sinoma Science & Technology Co., Ltd., en utilisant le montage de la figure 2b placées dans le four et maintenues par le mécanisme de défilement.

Les conditions opératoires sont les suivantes :

- diamètre intérieur du tube quartz utilisé = 50 mm
- acétylène = 0,05 l/min
- hydrogène = 0,1 l/min
- argon = 0,9 l/min
- température du four 1= 650°C
- température du four 2 = 250 à 260°C
- durée de synthèse = 20 min
- concentration de ferrocène dans xylène : 0,05 g/ml et débit liquide à 12 ml/h

La figure 8a représente la photographie des fibres de verre en microscopie électronique à balayage après dépôt des NTC à leur surface par le procédé de l'invention. Les NTC apparaissent très denses et alignés. La figure 8b représente la photographie des fibres de verre après dépôt des NTC en plus fort grossissement par le procédé de l'invention.

Ces différents exemples montrent que le procédé selon l'invention, offre des possibilités d'adaptations et apporte un intérêt industriel :

1. Il permet un traitement plus fiable et plus homogène sur les renforts particulaires et les fibres longues.
2. Il rend possible le traitement des fibres, sans endommagement. Il rend possible le contrôle de la structure de la couche de nanotubes et offre ainsi des solutions pour modifier la répartition des diamètres, la densité et l'arrangement des nanotubes sur les renforts micrométriques selon application envisagée.

**Exemple 5 : Composites : application peinture conductrice électrique**

Le but de cet exemple est de rendre conductrice une peinture en incorporant un matériau selon l'invention qui comprend des nanotubes de carbones à sa surface.

Ce type de peinture peut être intéressant dans de nombreux domaines industriels comme par exemple en aéronautique, multimédia, médical, automobile, militaire, maritime, etc. En l'air, l'avion se charge d'électricité statique qu'il faut évacuer en queue d'avion, tout comme la foudre lorsqu'elle le frappe. Cette évacuation est actuellement assurée par un câblage de cuivre d'un certain poids économiquement préjudiciable. Le remplacement de ce câblage par une peinture conductrice permettrait de réduire considérablement le coût économique.

Les conditions opératoires sont les suivantes :

La peinture préparée dans cet exemple est une peinture polyuréthanne comprenant un système de polyuréthane, une base polyol en résine acrylique (fournie par la société MAPAERO), un durcisseur isocyanate RHODOCOAT X EZ D 401 (fourni par la société MAPAERO) et un matériau renfort selon l'invention.

Le matériau utilisé comme renfort dans cet exemple est celui préparé selon le mode opératoire d) de l'exemple 1. La matériau a un diamètre de 10 nm, une longueur de 60 à 70 $\mu$m et une prise de masse de 47 % par rapport à la masse totale du matériau résultant (alumine+NTC)

La composition de la peinture conductrice préparée est la suivante :

- Base polyol : 70 g
- Durcisseur RHODOCOAT X EZ D 401 : 16,1 g
- Diluant(eau) : 7 g
- Renfort selon l'invention : 1,7 g

La peinture est préparée par simple mélange des composants indiqués ci-dessus à T°C ambiante (environ 20°C).

Mesures résistances de surface :

La résistance de surface est la mesure de la résistance inhérente de la surface d'un matériau au flux de courant.

La résistance de surface a été mesurée par le montage de la figure 9. Le montage consiste en deux électrodes de cuivre séparé de 2,6 cm et qui forment un carré de 2,6 cm de coté. Ces deux électrodes sont reliées au Keithley 2400 qui sert simultanément de générateur de tension et d'ampèremètre. Une tension de 210 V est appliquée.

On obtient ainsi une mesure de la résistance de surface Rs.

Réultats

La figure 10 montre et compare la résistance électrique surfacique d'une peinture conductrice selon l'exemple avec une peinture à base d'un renfort constitué que de nanotubes de carbone.

La peinture polyuréthane formulée améliore d'un facteur 10 la conductivité surfacique de la peinture par rapport à une peinture ne contenant que des nanotubes seuls comme renfort. Le seuil de conductivité est atteint dès 0,5% en masse de NTC dans la peinture finale.

**Exemple 6 : Composites : application matériaux structuraux**

Un matériau composite structural est généralement constitué d'un renfort et d'une matrice. Le renfort, le plus souvent sous forme fibreuse ou filamentaire, assure l'essentiel des propriétés mécaniques.

Dans cet exemple, le renfort utilisé est une fibre de carbone comprenant des NTC à sa surface. La synthèse en continu des NTC sur les fibres de carbone est schématisée sur la figure 2. A partir d'une bobine de fibres de carbone vierges, la synthèse des NTC (nanotubes de carbone) est réalisée par la méthode de dépôt chimique en phase vapeur (CVD) dans un réacteur placé dans un four porté à une température de 650°C, dans lequel sont injectés « en continu » le gaz acétylène ($C_2H_2$) et le xylène comme source de carbone, et le ferrocène comme catalyseur. Les conditions opératoires sont les suivantes :

- acétylène = 0,1 l/min
- hydrogène = 0,1 l/min
- argon = 1,0 l/min
- température du four 1 = 650°C
- durée de synthèse = 9 h
- vitesse de défilement de fibre = 0,15 m/min
- concentration de ferrocène dans xylène : 0,05 g/ml et débit liquide à 12 ml/h.

Les fibres passent dans le réacteur par un système de poulies, puis s'enroulent sur un tambour, faisant 23 cm de diamètre et 25 cm de long, soit un pli unidirectionnel (toutes les fibres sont dans un même sens) de 25 cm de large sur 72 cm de long, une fois déroulé. Le tambour peut être recouvert d'une feuille de résine époxy M21 commercialisée par la société Hexcel.

Un système motorisé permet alors de fabriquer des plaques de pré-imprégné de 720 mm x 250 mm de composite (figure 11), en assemblant selon les séquences d'empilement prévues, les plis ainsi fabriqués. La cuisson du composite a été effectuée selon le même cycle que pour les composites sans nanotubes, établi par la société Hexcel pour ce type de composite.

Résultats

Les mesures de conductivité ont été ralisées avec le même montage (figure 9) que celui utilisé dans l'exemple précédent. Les mesures de conductivités effectuées sur des plaques 8 plis sont résumées dans le tableau suivant :

| Conductivités (S/m) | Mèches de fibres | | Plaques Composites | | |
|---|---|---|---|---|---|
| | *Sens fibres* | *épaisseur* | *Sens fibres* | *Sens plis* | *épaisseur* |
| **Référence** | 2,7 E+03 | 5,66 E-04 | 2,50 E+03 | 1,70 E +03 | 1.07 |
| **Hybride FC/NTC** | 1,5 E +04 | 2,1 E -01 | 5,00E +04 | 2,50 E +04 | 9,06 |

Pour les plaques composites, « sens plis » signifie le sens largeur de la plaque et « sens fibre » signifie le sens long de la plaque (72cm).

La caractérisation mécanique pour les 2 plaques donne un module d'Young d = 100 GPa

Les composites comprenant des fibres de carbones recouvertes de NTC améliorent nettement la conductivité du composite sans modifier sensiblement ses propriétés mécaniques. La fraction massique des fibres est d'environ 60%, celle de NTC est d'environ 1% par rapport la masse totale du composite.

Les résines époxy comportant des fibres de carbone recouvertes de NTC possèdent de bonnes caractéristiques mécaniques. Elles sont généralement utilisées pour la réalisation de pièces de structure et d'aéronautique.

**Exemple 7 : Composites : application matériaux d'interface thermique**

Dans cet exemple, un matériau composite est préparé. Le matériau utilisé comme renfort dans cet exemple est celui préparé selon le mode opératoire d) de l'exemple 1. La matrice est une résine époxy (Résine Resoltech 1800, durcisseur Resoltech D1084, commercialisés par la société Resoltech, France).

Le renfort est ajouté dans la résine 1800 en présence d'un durcisseur D1084. La proportion résine : durcisseur est de 100: 33. Le tout est mélangé manuellement à température ambiante (environ 20°C).

La conductivité thermique du composite obtenu est mesurée en fonction de la quantité du renfort (alumine-NTC) présente dans ledit matériau (figure 12).

La mesure thermique est effectuée sur des échantillons ayant une surface de 1 cm$^2$ et une épaisseur d'environ 1 mm. La caractérisation thermique est réalisée avec un appareil d'éclair LFA 447 (de la société Netzsch-Geratebau, Allemagne). L'impulsion lumineuse est produite par une lampe-éclair haute performance Xenon placée à l'intérieur du miroir parabolique. Les mesures de conductivité thermique sont répétées 3 fois sur le même échantillon concluant à l'excellente reproductibilité des mesures.

**Listes des références**

[1] P.M. Ajayan, Chem. Rev., vol. 99, p.1787, 1999, Nanotubes from carbon.

[2] Z-G. Zhao, L-J. Ci, H-M. Cheng, J-B. Bai, Carbon 43 (2005) 651-673 ; X. Gao, L. Liu, Q. Guo, J. Shi, G. Zhai, Materials Letters 59 (2005) 3062 - 3065 ; N. Sonoyama, M. Ohshita, N. Akio, H. Nishikawa, H. Yanase, J. Hayashi, T. Chiba, Carbon 44 (2006) 1754-1761.

[3] Q-J. Gong, H-J. Li, X. Wang, Q-G. Fu, Z-W. Wang, K-Z. Li, Composites Science and Technology 67 (2007) 2986-2989.

[4] H. Qian, A. Bismarck, E.S. Greenhalgh, G. Kalinka, M. S. P. Shaffer, Chem. Mater., 20 (2008), 1862-1869.

**Revendications**

**1.** Procédé de synthèse de nanotubes de carbone à la surface d'un matériau, comprenant les étapes suivantes réalisées sous un courant de gaz inerte(s) éventuellement en mélange avec de l'hydrogène :

(i) chauffage dans une enceinte réactionnelle du matériau, à la surface duquel les nanotubes de carbone sont à synthétiser, à une température allant de 350°C à 850°C ;
(ii) introduction dans ladite enceinte, d'une source de carbone constituée d'acétylène et de xylène, et d'un catalyseur comprenant du ferrocène ;
(iii) exposition du matériau chauffé à la source de carbone et au catalyseur comprenant du ferrocène pendant une durée suffisante pour obtenir des nanotubes de carbone à la surface dudit matériau ;
(iv) récupération éventuellement après refroidissement du matériau comprenant à sa surface des nanotubes de carbone, à l'issue de l'étape (iii),

dans lequel dans l'étape (ii) :

l'acétylène est introduit dans l'enceinte réactionnelle sous forme de gaz en une quantité supérieure à 0 et allant jusqu'à 20% en volume du gaz total, et le xylène est introduit dans l'enceinte réactionnelle sous forme de liquide en mélange avec le ferrocène dans lequel la teneur en ferrocène dans le mélange est comprise entre 0,001 à 0,3 g de ferrocène/ml de xylène.

2. Procédé selon la revendication 1, dans lequel le matériau dans l'étape (i) se présente sous forme de fibres de diamètre de 1 à 100 $\mu$m, ou de particules de diamètre de 0,1 à 100 $\mu$m.

3. Procédé selon l'une des revendications 1 ou 2, dans lequel le matériau se présente sous forme de fibres longues avec un diamètre de 4 à 50 $\mu$m.

4. Procédé selon l'une quelconque des revendications 1 à 3, dans lequel le procédé de synthèse est en continu.

5. Procédé selon l'une quelconque des revendications 1 à 4, dans lequel le matériau est choisi dans le groupe comprenant :

   - des fibres de carbone, de verre, d'alumine, de carbure de silicium (SiC), de roche ;
   - des matériaux céramiques choisis dans le groupe comprenant des particules et fibres de nitrure de silicium ($Si_3N_4$), carbure de bore ($B_4C$), carbure de silicium (SiC), carbure de titane (TiC), cordiérite ($Al_3Mg_2AlSi_5O_{18}$), mullite ($Al_6Si_2O_{13}$), nitrure d'aluminium (AIN), nitrure de bore (NB), alumine ($Al_2O_3$), borure d'aluminium ($AlB_2$), oxyde de magnésium (MgO), oxyde de zinc (ZnO), oxyde magnétique de fer ($Fe_3O_4$) zircone ($ZrO_2$), silice ($SiO_2$), fumées de silice, CaO, $La_2CuO_4$, $La_2NiO_4$, $La_2SrCuO_4$, $Nd_2CuO_4$, $TiO_2$, $Y_2O_3$, silicates d'aluminium (argiles).

6. Procédé selon l'une quelconque des revendications 1 à 5, dans lequel dans l'étape (i) le matériau est chauffé à une température allant de 400°C à 780°C.

7. Procédé selon l'une quelconque des revendications 1 à 6, dans lequel dans l'étape (ii), l'acétylène est introduit dans l'enceinte réactionnelle sous forme de gaz avec une vitesse linéaire de $5,0 \times 10^{-6}$ à $1,0 \times 10^{-1}$ m/s.

8. Procédé selon l'une quelconque des revendications 1 à 7, dans lequel dans l'étape (iii), le matériau est exposé à la source de carbone et au catalyseur pendant une durée de 1 à 120 minutes.

9. Procédé selon l'une quelconque des revendications 1 à 8, dans lequel dans l'étape (iv), le matériau obtenu à l'étape (iii) comprenant à sa surface des nanotubes de carbone, est récupéré sans refroidissement préalable ou après refroidissement à une température de 15 à 35°C.

10. Procédé selon l'une quelconque des revendications 1 à 9, dans lequel les étapes (i) à (iv) sont réalisées sous un courant de gaz inerte(s) éventuellement en mélange avec de l'hydrogène avec un rapport hydrogène/gaz inerte(s) de 0/100 à 50/50.

11. Matériau comprenant à sa surface des nanotubes de carbone susceptible d'être obtenus par un procédé selon l'une quelconque des revendications 1 à 10, dans lequel le nombre de NTC à la surface du matériau est compris entre 5 et 200 par $\mu$m$^2$.

12. Matériau selon la revendication 11, ayant une prise de masse comprise entre 0,2 et 80% par rapport à la masse du matériau de départ.

13. Matériau selon la revendications 11 à 12 présentant une surface spécifique comprise entre 150 et 2000 m$^2$/g.

14. Utilisation d'un matériau selon l'une quelconque des revendications 11 à 13, comme renfort pour la préparation de matériaux composites structuraux et fonctionnels.

15. Utilisation d'un matériau selon l'une quelconque des revendications 11 à 14, comme renfort pour la préparation de peintures et vernis.

**Patentansprüche**

1. Verfahren zur Synthese von Kohlenstoff-Nanoröhrchen auf der Oberfläche eines Materials umfassend die folgenden Schritte, die in einem Strom von Inertgas(en) gegebenenfalls in Mischung mit Wasserstoff durchgeführt werden:

(i) in einer Reaktionskammer das Material, auf dessen Oberfläche die Kohlenstoff-Nanoröhrchen synthetisiert werden sollen, auf eine Temperatur von 350 °C bis 850 °C erhitzen;
(ii) eine Kohlenstoffquelle, die aus Acetylen und Xylol besteht, und einen Katalysator, der Ferrocen umfasst, in die Kammer einbringen;
(iii) das erhitzte Material der Kohlenstoffquelle und dem Ferrocen umfassenden Katalysator aussetzen für eine Zeit, die ausreichend ist, um Kohlenstoff-Nanoröhren auf der Oberfläche des Materials zu erhalten;
(iv) nach dem Schritt (iii), gegebenenfalls nach dem Abkühlen, das Material, das an seiner Oberfläche Kohlenstoff-Nanoröhrchen umfasst, zurückgewinnen,

wobei in Schritt (ii)
das Acetylen in die Reaktionskammer als Gas in einer Menge von 0 bis 20% des gesamten Gasvolumens eingeführt wird und das Xylol in die Reaktionskammer als Flüssigkeit in Mischung mit dem Ferrocen eingeführt wird, wobei der Gehalt an Ferrocen der Mischung von 0,001 bis 0,3 g Ferrocen/ml Xylol beträgt.

2. Verfahren nach Anspruch 1, wobei das Material in Schritt (i) in Form von Fasern mit einem Durchmesser von 1 bis 100 $\mu$m, odereinem Partikeldurchmesser von 0,1 bis 100 $\mu$m vorliegt.

3. Verfahren nach einem der Ansprüche 1 oder 2, wobei das Material in Form von langen Fasern mit einem Durchmesser von 4 bis 50 $\mu$m vorliegt.

4. Verfahren nach einem der Ansprüche 1 bis 3, wobei der Syntheseprozess kontinuierlich ist.

5. Verfahren nach einem der Ansprüche 1 bis 4, wobei das Material aus der Gruppe ausgewählt ist, die aus Folgenden besteht:

   - Kohlenstofffasern, Glas, Aluminiumoxid, Siliciumcarbid (SiC), Stein;
   - Keramische Materialien, ausgewählt aus der Gruppe umfassend Siliziumnitridteilchen und -fasern ($Si_3N_4$), Borcarbid ($B_4C$), Siliziumkarbid (SiC), Titankarbid (TiC), Cordierit ($Al_3Mg_2AlSi_5O_{18}$), Mullit ($Al_6Si_2O_{13}$), Aluminiumnitrid (AIN), Bornitrid (NB), Aluminiumoxid ($Al_2O_3$), Aluminiumborid ($AlB_2$), Magnesiumoxid (MgO), Zinkoxid (ZnO), magnetisches Eisenoxid ($Fe_3O_4$), Zirkonoxid ($ZrO_2$), Kieselsäure ($SiO_2$), Silikastaub, CaO, $La_2CuO_4$, $La_2NiO_4$, $La_2SrCuO_4$, $Nd_2CuO_4$, $TiO_2$, $Y_2O_3$, Aluminosilikate (Tonerden).

6. Verfahren nach einem der Ansprüche 1 bis 5, wobei in Schritt (i) das Material auf eine Temperatur im Bereich von 400 °C bis 780 °C erhitzt wird.

7. Verfahren nach einem der Ansprüche 1 bis 6, wobei in Schritt (ii), Acetylen als Gas in die Reaktionskammer mit einer linearen Geschwindigkeit von 5,0 x $10^{-6}$ mit 1,0 x $10^{-1}$ m/s eingeführt wird.

8. Verfahren nach einem der Ansprüche 1 bis 7, wobei in Schritt (iii) das Material der Kohlenstoffquelle und dem Katalysator für eine Zeitdauer von 1 bis 120 Minuten ausgesetzt ist.

9. Verfahren nach einem der Ansprüche 1 bis 8, wobei in Schritt (iv) das in Schritt (iii) erhaltene Material, das an seiner Oberfläche Kohlenstoff-Nanoröhren umfasst, ohne Abkühlen oder nach dem Abkühlen auf eine Temperatur von 15 bis 35 °C zurückgewonnen wird.

10. Verfahren nach einem der Ansprüche 1 bis 9, wobei die Schritte (i) bis (iv) in einem Strom von Inertgas(en) gegebenenfalls im Gemisch mit Wasserstoff in einem Verhältnis von 0/100 bis 50/50 des Wasserstoffs/ Inertgas durchgeführt werden.

11. Material, das auf seiner Oberfläche Kohlenstoffnanoröhrchen umfasst, die durch ein Verfahren nach einem der Ansprüche 1 bis 10 erhalten werden können, wobei die Anzahl von CNTs auf der Oberfläche des Materials zwischen 5 und 200 pro $\mu$m$^2$ beträgt.

12. Material nach Anspruch 11, das eine Zunahme der Masse zwischen 0,2 und 80% bezogen auf die Masse des Ausgangsmaterials hat.

13. Material nach einem der Ansprüche 11 bis 12 mit einer spezifischen Oberfläche von 150 bis 2000 m$^2$/g.

**14.** Verwendung eines Materials nach einem der Ansprüche 11 bis 13 als Verstärkung für die Herstellung von strukturellen und funktionellen Kompositmaterialien.

**15.** Verwendung eines Materials nach einem der Ansprüche 11 bis 14 als Verstärkung für die Herstellung von Farben und Lacken.

**Claims**

**1.** A method for the synthesis of carbon nanotubes on the surface of a material, comprising the following steps carried out under a stream of inert gase(s) possibly mixed with hydrogen:

> (i) heating the material in a reactor, at the surface of which the carbon nanotubes are to be synthesized, at a temperature ranging from 350°C to 850°C;
> (ii) introducing in said reactor, a carbon source comprising acetylene and xylene, and a catalyst containing ferrocene;
> (iii) exposing the heated material to the carbon source and the ferrocene-containing catalyst for a duration sufficient for obtaining carbon nanotubes at the surface of said material;:
> (v) recovering, optionnaly after cooling, the material comprising at its surface carbon nanotubes, at the end of step (iii),

> wherein in step (ii)
> the acetylene is introduced in the reactor in the form of gas in a quantity higher than 0 and able to reach up to 20 vol.% of the total gas, and the xylene is introduced in the reactor under liquid form in a mixture with the ferrocene in which the ferrocene content in this mixture ranges between 0.001 to 0.3g of ferrocene/ml of xylene.

**2.** The method according to claim 1, wherein the material in step (i) is in the form of fibers of a diameter of 1 to 100 $\mu$m, or particles with a diamer of 0.1 to 100 $\mu$m.

**3.** The method according to any one of claims 1 or 2, whrein the material is in the form of long fibers with a diameter of 4 to 50 $\mu$m.

**4.** The method according to any one of claims 1 to 3, wherein the synthesis method is continuous.

**5.** The method according to any one of claims 1 to 4, wherein the material is selected from the group comprising:

> - fibers of carbon, glass, alumina, silicon carbide (SiC), rock;
> - ceramic materials selected from the group comprising particles and fibers of silicon nitride ($Si_3N_4$), boron carbide ($B_4C$), silicon carbide (SiC), titanium carbide (TiC), cordierite ($Al_3Mg_2AlSi_5O_{18}$), mullite ($Al_6Si_2O_{13}$), aluminium nitride (AIN), boron nitride (NB), alumina ($Al_2O_3$), aluminium boride ($AlB_2$), magnesium oxide (MgO), zinc oxide (ZnO), magnetic iron oxide ($Fe_3O_4$), zirconia ($Zr_2O$), silica ($Si_2O$), silica fume, CaO, $La_2CuO_4$, $La_2NiO_4$, $La_2SrCuO_4$, $Nd_2CuO_4$, $TiO_2$, $Y_2O_3$, aluminium silicates (clays).

**6.** The method according to any one of claims 1 to 5 wherein in step (i) the material is heated at a temperature ranging from 400°C to 780°C.

**7.** The method according to any one of claims 1 to 6, wherein in step (ii), the acetylene is introduced in the reactor in the form of gas at a linear velocity of $5.0 \times 10^{-6}$ to $1.0 \times 10^{-1}$ m/s.

**8.** The method according to any one of claims 1 to 7, wherein in step (ii), the material is exposed to a carbon source and to the catalyst for 1 to 120 minutes.

**9.** The method according to any one of claims 1 to 8, wherein in step (iv), the material obtained from step (iii) comprising at its surface carbon nanotubes, is recovered without any prior cooling or after cooling at a temperature of 15 to 35°C.

**10.** The method according to any one of claims 1 to 9 wherein steps (i) to (iv) are performed under a stream of inert gas(es) optionnally mixed with hydrogen at a hydrogen/inert gas(es) ratio of 0/100 to 50/50.

11. A material comprising at its surface carbon nanotubes that may be obtained by a method according to any one of claims 1 to 10 wherein the number of CNT at the surface of the material ranges between 5 and 200 per $\mu m^2$.

12. The material according to claim 11, having a mass increase ranging between 0.2 and 80% with respect to the mass of the starting material.

13. The material according to claims 11 to 12 having a specific surface area ranging between 150 and 2000 $m^2/g$.

14. Use of a material according to any one of claims 11 to 13, as reinforcement for the preparation of structural and functional composite materials.

15. Use of a material according to any one of claims 11 to 14, as reinforcement for the preparation of paints and varnishes.

Figure 1

Figure 2a

Figure 2b

Figure 3

EP 2 370 355 B1

**Masse de Ferrocène en phase vapeur en chambre**

Figure 4

Figure 5a

Figure 5b

Figure 5c

EP 2 370 355 B1

Figure 5d

Mag = 2.00 K X | 10µm | EHT = 5.00 kV | Signal A = InLens | Date :26 Nov 2008
| | WD = 4 mm | Photo No. = 6467 | Aperture Size = 30.00 µm

Figure 5e

Figure 6a

Figure 6b

Figure 7a

Figure 7b

Figure 8a

Figure 8b

Figure 9

Figure 10

Figure 11

Figure 12

# RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2865739

**Littérature non-brevet citée dans la description**

- **BRUNAUER - EMMET - TELLER.** *The journal of the American Chemical Society,* vol. 60, 309-51938
- **P.M. AJAYAN.** Nanotubes from carbon. *Chem. Rev.,* 1999, vol. 99, 1787
- **Z-G. ZHAO ; L-J. CI ; H-M. CHENG ; J-B. BAI.** *Carbon,* 2005, vol. 43, 651-673
- **X. GAO ; L. LIU ; Q. GUO ; J. SHI ; G. ZHAI.** *Materials Letters,* 2005, vol. 59, 3062-3065
- **N. SONOYAMA ; M. OHSHITA ; N. AKIO ; H. NISHIKAWA ; H. YANASE ; J. HAYASHI ; T. CHIBA.** *Carbon,* 2006, vol. 44, 1754-1761
- **Q-J. GONG ; H-J. LI ; X. WANG ; Q-G. FU ; Z-W. WANG ; K-Z. LI.** *Composites Science and Technology,* 2007, vol. 67, 2986-2989
- **H. QIAN ; A. BISMARCK ; E.S. GREENHALGH ; G. KALINKA ; M. S. P. SHAFFER.** *Chem. Mater.,* 2008, vol. 20, 1862-1869